# EUROPÄISCHE PATENTSCHRIFT

(11) **EP 0 999 032 B1**
(45) Veröffentlichungstag und Bekanntmachung des Hinweises auf die Patenterteilung: **09.10.2002**
(21) Anmeldenummer: 99121789.4
(22) Anmeldetag: 03.11.1999
(51) Int. Cl.: B29C 47/08, F16H 1/22

(54) **Getriebe insbesondere für Doppelschneckenextruder**
Transmission for twin screw extruder
Transmission pour extrudeuse à deux vis

(30) Priorität: 06.11.1998 DE 29819820 U
(43) Veröffentlichungstag der Anmeldung: 10.05.2000
(73) Patentinhaber: PIV Drives GmbH, 61352 Bad Homburg (DE)
(72) Erfinder: Berky, Alfred, 61440 Oberursel (DE)
(74) Vertreter: Blumenröhr, Dietrich

(56) Entgegenhaltungen:
- EP-A- 0 679 495
- WO-A-97/10939
- DE-A- 2 130 599

## Beschreibung

Die Erfindung betrifft ein Getriebe insbesondere für DoppelschneckenExtruder, mit einer Antriebswelle und zumindest einem Abtriebsglied und mit der Merkmale des Oberbegriffs von Anspruch 1.

Derartige Getriebe werden in den verschiedensten Anwendungsbereichen eingesetzt, weshalb nachfolgend nur beispielhaft, aber nicht schutzbeschränkend von Doppelschnecken-Extrudergetrieben die Rede sein soll. Allen Getrieben ist mehr oder weniger das Optimierungsproblem gemeinsam, daß es zum einen zwar leistungsstark sein und somit beispielsweise zur Übertragung eines großen Drehmomentes verwendbar sein soll, es auf der anderen Seite aber mit möglichst geringem Aufwand auskommen soll.

So sind bereits aufwendig gestaltete Getriebe bekannt, deren Abtriebswelle über zwei Seitenwellen angetrieben wird, wobei beide Seitenwellen als Torsionswellen ausgebildet und dementsprechend aufwendig gestaltet sind. Die beiden Seitenwellen werden über die gemeinsame Antriebswelle - gegebenenfalls unter Zwischenschaltung eines Reduktionsgetriebes - angetrieben. Eine einfachere Ausführungsform besteht nun beispielsweise darin, eine Seitenwelle wegzulassen und die Antriebsleistung nur über eine Seitenwelle zu übertragen. Wie jedoch unschwer erkennbar ist, läßt sich in diesem Fall ein nur reduziertes Drehmoment übertragen verglichen mit der Ausführungsform mit zwei Seitenwellen. Schließlich weist eine alternative Bauform eines Getriebes der eingangs genannten Art ebenfalls nur eine Seitenwelle auf, die jedoch zur Verbesserung der Drehmoment- bzw. Antriebsleistungsübertragung mit zwei miteinander fluchtenden Zahneingriffsbereichen versehen ist, die - relativ zur Antriebsrichtung - nebeneinander auf der gleichen Seitenwelle bzw. Abtriebswelle angeordnet sind und eine sind und eine gleichzeitige Leitungsübertragung durchführen. Nachteilig an dieser Getriebevariante ist jedoch der hierbei erforderliche große Platzbedarf in Axialrichtung.

Darüber hinaus ist aus der DE-A 2 130 599 ein Zahnradgetriebe zum Antrieb einer Welle bei beschränktem Platz für Zahnrad und Wellenradiallager bekannt, bei dem das Antriebsdrehmoment von einer Antriebswelle auf ein Zwischenrad und von dort einerseits direkt auf das Abtriebsglied und andererseits auf ein Verteilerrad übertragen wird, welches das Teildrehmoment auf ein zweites Zwischenrad weiterleitet, welches dieses Teildrehmoment wiederum auf das Abtriebsglied überträgt in einem Eingriffsbereich, der dem Eingriffsbereich des ersten Zwischenrades genau gegenüberliegt. Die beiden Zwischenräder und das Verteilerrad sind hierzu in einer Schwinge angeordnet, deren Drehachse mit der Achse der Antriebswelle zusammenfällt und außerdem mit den Drehachsen der beiden Zwischenrädern in einer Ebene liegt. Die Schwinge funktioniert dabei als selbsteinstellendes Glied zur Übertragung der Teildrehmomente auf die Abtriebswelle. Gleichzeitig führt die Einleitung der Teildrehmomente von zwei gegenüberliegenden Seiten in die Abtriebswelle zu einer Entlastung der Abtriebswellenradiallager und gestattet die Verwendung von leichten Wälzlagern mit geringer Tragfähigkeit.

Hiervon ausgehend liegt der vorliegenden Erfindung die Aufgabe zugrunde, Getriebe der eingangs genannten Art weiter zu verbessern, insbesondere hinsichtlich ihrer Funktion bzw. ihres Arbeitsverhaltens.

Diese Aufgabe wird erfindungsgemäß dadurch gelöst, daß das Verteilerrad zumindest mittelbar relativ zu den Zwischenrädern in Radialrichtung beweglich gelagert ist.

Hierdurch ergibt sich der Vorteil, daß durch Verwendung zweier Zwischenräder zwei Eingriffsbereiche zur Verfügung gestellt werden können und somit trotz nur einer das Verteilerrad antreibenden Seiten- bzw. Torsionswelle ein doppelt so großes Drehmoment übertragen werden kann, verglichen mit der Bauform mit nur einer direkt und nur über einen Eingriffsbereich auf das Abtriebsglied einwirkenden Seitenwelle, und dies noch dazu mit nur geringem Mehraufwand. Auch kommt das Getriebe mit einem gegenüber dem beschriebenen Doppeleingriff zweier miteinander fluchtender Eingriffsbereiche deutlich verkürzten axialen Bauraum aus.

Der besondere Vorteil des vorliegenden Getriebes liegt jedoch vor allem darin, daß das schwenkbar gelagerte Verteilerrad dafür sorgt, daß die Drehmomentübertragung zu keinem der beiden Zwischenräder gestört wird, da das Verteilerrad durch die radial bewegliche, also nachgiebige Lagerung in ständige Anlage mit der Verzahnung der Zwischenräder bringbar ist.

Desweiteren ist es besonders vorteilhaft und einfach, wenn die radial bewegliche Lagerung des Verteilerrades in schwenkbarer Weise und insbesondere über ein das Verteilerrad aufnehmendes Schwenkglied erfolgt, das seinerseits über ein versetzt zur Verteilerradachse und fest im Gehäuse angeordnetes Schwenklager gelagert ist. Während also das Verteilerrad, das sich relativ zu den beiden Zwischenrädern in Radialrichtung bewegen können soll, in Rotationsrichtung frei drehbar, jedoch radial unnachgiebig in dem Schwenkglied angeordnet ist, sorgt das Schwenkglied für die gewünschte freie Beweglichkeit.

Was die Position des Schwenklagers betrifft, so sollte die Achse des Schwenklagers so relativ zum Verteilerrad positioniert sein, daß die durch die Achse des Schwenklagers und die Achse des Verteilerrades gebildete Ebene parallel zu der Resultierenden der beiden Zahneingriffsnormalkraftebenen verläuft, so daß diese Ebene eine Neigung gegenüber der von den Achsen der Zwischenräder gebildeten Ebene aufweist, die dem Betriebseingriffswinkel α_{wt} der Resultierenden der beiden Zahneingriffe entspricht. Dies führt in besonders vorteilhafter Weise dazu, daß eine senkrecht zu der genannten Resultierenden wirkende Kraftkomponente das Verteilerrad ständig gegen die Lastflanken der Zwischenräder drückt, wodurch bei kleinen Teilungs- bzw. Verzahnungsfehlern eine hierbei unterbrochene Wirkverbindung dadurch umgehend wieder hergestellt wird, daß das Verteilerrad aufgrund der erwähnten Kraftkomponente so weit zu dem kontaktlosen Zahneingriff hinbewegt wird, bis die Wirkverbindung und somit auch das Gleichgewicht der Drehmomentübertragung auf beide Zwischenräder wieder hergestellt ist.

Diese selbstätige Zustellbewegung zum Ausgleich etwaiger Teilungsfehler erfolgt natürlich in gleicher Weise für beide Eingriffsbereiche, also gegenüber beiden Zwischenrädern und sorgt somit auch für eine Gleichverteilung der übertragenen Antriebskräfte unabhängig davon, welcher Kontakt mit welchem Zwischenrad beeinträchtigt bzw. gestört wird.

Wie bereits eingangs erwähnt, kann das Getriebe bei den verschiedensten Anwendungsfällen eingesetzt werden; so kann das Abtriebsglied ein mit einer Abtriebswelle zusammenwirkendes Ritzel sein, also das Getriebe für eine rotierende Abtriebsbewegung - am besten ohne Drehrichtungsumkehr - verwendet werden; in gleicher Weise ist es jedoch auch möglich, die Erfindung bei Linearantrieben zu verwenden. Soweit Linearantriebe betroffen sind, so ergibt sich die gleichmäßige Aufteilung der Antriebskräfte bzw. des Antriebsdrehmomentes auf beide Zwischenräder vor allem dann, wenn der Antrieb zum Heben bzw. Senken verwendet wird, also unabhängig von der Antriebsrichtung die vertikal wirkende Gewichtskraft auf das Getriebe einwirkt, wodurch die Kraftkomponenten in den Eingriffsbereichen unabhängig von der Förderrichtung die gleiche Richtung behalten. Im horizontalen Antriebsfall dagegen führt eine Änderung der Antriebsrichtung auch zu einer Umkehr der Antriebskräfte, wodurch die Gleichgewichtsverhältnisse aufgrund der erwähnten senkrecht zur Stützkraft stehenden Kraftkomponente abgeändert werden. In diesem Fall würde sich eine Wiederherstellung der optimalen Gleichgewichtsverteilung auf beide Zwischenräder erst dann ergeben, wenn die Position des Schwenklagers des Verteilerrades an die neuen Kraftflußrichtungen und somit an den neuen Betriebseingriffswinkel angepaßt würde.

Zweckmäßigerweise dient das erfindungsgemäße Getriebe also für solche Anwendungsfälle mit immer gleicher Antriebsrichtung, wie es beispielsweise bei Doppelschneckenextrudern der Fall ist, bzw. bei alternierenden Antriebsrichtungen dann, wenn sich - wie eben beispielsweise bei Hubantrieben - durch die Drehrichtungsumkehr nicht die Kraftverhältnisse bzw. Kraftrichtungen in den Zahneingriffen ändern.

Zur Anwendung bei Doppelschneckenextrudern weist das Getriebe zwei Abtriebswellen auf, wobei nur die erste Abtriebswelle über die zwei Zwischenräder und das Verteilerrad, jedoch die zweite Abtriebswelle direkt - gegebenenfalls unter Zwischenschaltung eines Reduktionsgetriebes - von der Antriebswelle antreibbar sind. Das Getriebe kann hierbei für Gegenlaufextrusion wie auch für Gleichlaufextrusion verwendet werden.

Ein Vorteil des leistungsstarken, aber doch sehr einfach gestalteten Getriebes liegt außerdem darin, daß das Getriebegehäuse nur eine einzige Trennfuge aufweisen muß, die entweder horizontal oder vertikal verläuft, wobei beispielsweise aufgrund der geringen Zahnradanzahl und des radial beweglichen Eingriffs trotzdem eine einfache Montage und Demontage möglich ist.

Weitere Merkmale und Vorteile der vorliegenden Erfindung ergeben sich aus der nachfolgenden Beschreibung eines Ausführungsbeispiels anhand der Zeichnung; hierbei zeigen
- Figur 1: ein erfindungsgemäßes Getriebe in Vorderansicht;
- Figur 2: das Getriebe aus Figur 1 entlang der Schnittebene A-A aus Figur 1;
- Figur 3: das Getriebe aus Figur 1 entlang der Schnittebene B-B aus Figur 1;
- Figur 4: den Getriebezug des Getriebes aus Figur 1 mit Betriebseingriffswinkel α_{wt} in schematischer Darstellung; und
- Figur 5: das bei dem Getriebe aus Figur 1 wirkende Kräftedreieck.

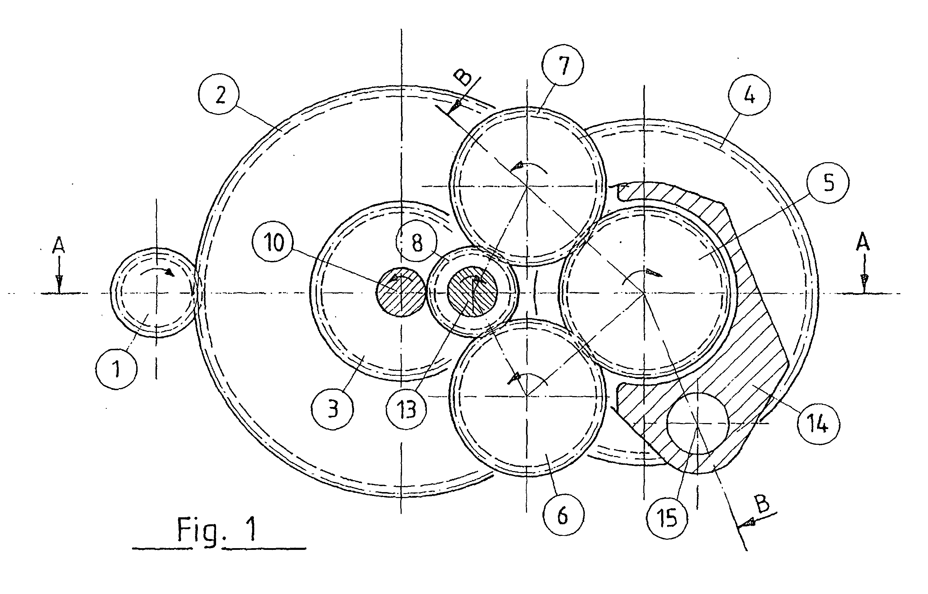

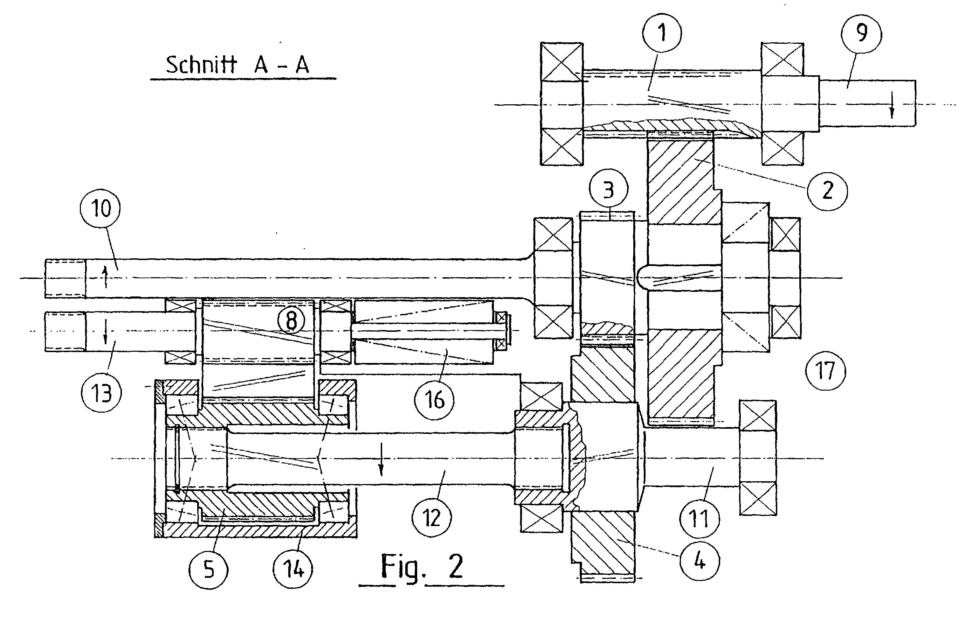

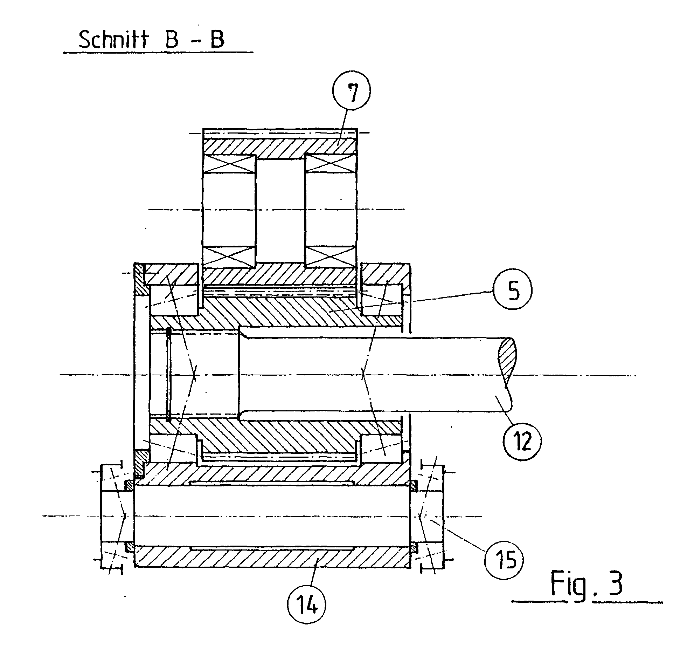

In den Figuren 1 bis 3 ist in verschiedenen Ansichten ein erfindungsgemäßes Doppelschnecken-Extrudergetriebe für Gegenlaufextrusion dargestellt, bei dem eine rotierende Antriebswelle 9 dazu vorgesehen ist zwei Abtriebswellen 10, 13 mit entgegengesetzter Drehrichtung anzutreiben. Hierzu ist die Antriebswelle 9 über ein erstes Rad 1 sowie ein zweites Rad 2, welche die Antriebsdrehzahl reduzieren, mit der Abtriebswelle 10 verbunden, auf die die Hälfte der Antriebsleistung übertragen wird. Die andere Hälfte wird über ein fluchtend mit dem zweiten Rad 2 angeordnetes Zahnrad 3 sowie ein damit kämmendes Zahnrad 4 auf eine Welle 11 und über diese auf eine mit der Welle 11 fluchtende und in Wirkverbindung stehende Torsionswelle 12 übertragen, welche diese halbe Antriebsleistung an ein Verteilerrad 5 weiterleitet. Das Verteilerrad 5 teilt - wie am besten aus Figur 1 ersichtlich ist - die Antriebsleistung noch einmal auf in zwei Zwidung stehen, welches fluchtend mit der zweiten Antriebswelle 13 angeordnet ist und mit dieser in Wirkverbindung steht.

Der wesentliche Aspekt der vorliegenden Erfindung liegt nun darin, daß das Verteilerrad 5 in einem als Schwinge ausgebildeten Schwenkglied 14 gelagert ist, welches wiederum seine Schwenkachse in einem Schwenkbolzen 15 besitzt, der versetzt zur Achse des Verteilerrades im Gehäuse angeordnet ist.

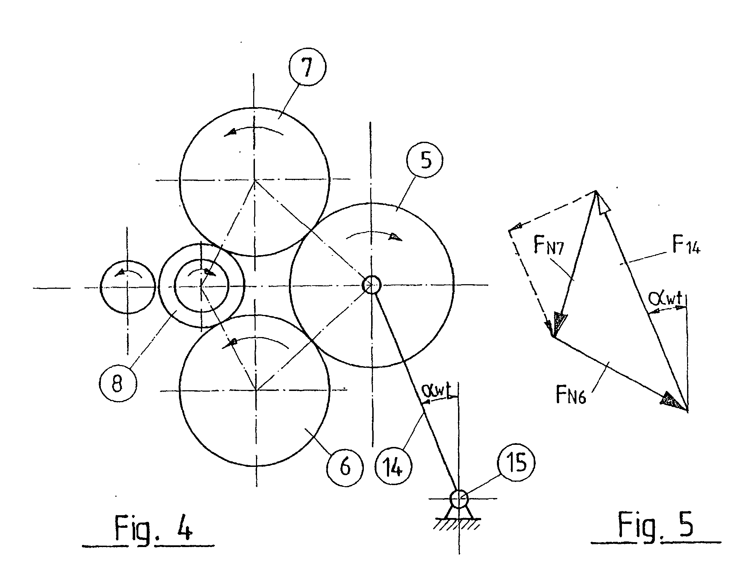

Wäre das Verteilerrad mit raumfester Achse gelagert, so würde sich aufgrund der üblichen Abstands- und Verzahnungsabweichungen eine ungleichmäßige Verteilung der Antriebsleistungen auf die beiden Verteilerräder 6 und 7 ergeben. Durch die vorliegende Erfindung wird nun erreicht, daß in beiden Zahneingriffen, also den Eingriffsbereichen zwischen dem Verteilerrad 5 und den beiden Zwischenrädern 6 bzw. 7 gleiche Normalkräfte F_{N6} bzw. F_{N7} vorliegen, wozu entsprechend den aus Figur 4 und 5 erkennbaren Gleichgewichtsbedingungen eine resultierende Stützkraft F₁₄ unter dem Betriebseingriffswinkel α_{wt} der beiden Zahneingriffe auf das Verteilerrad einwirkt. Wenn nun infolge von kleinen Verzahnungsfehlern der Kontakt des einen Zahneingriffs unterbrochen wird, sorgt stets eine senkrecht zur Stützkraft F₁₄ wirkende Kraftkomponente dafür, daß die Schwinge 14 soweit zu dem kontaktlosen Zahneingriff hin bewegt wird, bis das Gleichgewicht wieder hergestellt ist.

Da die - wenn auch nur geringe - Auslenkung der Schwinge 14 und somit des Verteilerrades 5 zu einem Versatz gegenüber der Torsionswelle 12 sowie der Welle 11 führt, sind die erwähnten Wirkverbindungen zwischen diesen Komponenten als Mitnahmeverzahnungen mit leichter Balligkeit ausgeführt.

Bezüglich der Lagerung des Bolzens 15 ist zu beachten, daß dieser sowohl in Axial- wie auch in Radialrichtung unverschieblich festgelegt sein muß, so daß er insbesondere die durch Schrägverzahnung der Getriebeglieder verursachten Axialkräfte abfangen kann.

Ergänzend sei noch erwähnt, daß der Durchmesser der Torsionswelle 12 zweckmäßigerweise so bemessen ist, daß an den beiden Abtriebswellen eine gleiche Torsionssteifigkeit erreicht wird. Die Axialkräfte, die im vorliegenden Fall durch den Schneckendruck auf die Abtriebswellen 10 und 13 übertragen werden, werden von Lagern 16 bzw. 17 aufgenommen, wobei die Schrägungsrichtung an den Zahnrädern 2, 3 und 8 zweckmäßigerweise so gewählt ist, daß die aus der Verzahnung entstehenden Axialkräfte der Schneckendruckkraft entgegenwirken und damit die Axiallager entlastet werden. Die Radiallager des Ritzels 8 werden durch die Verteilerräder 6 und 7 teilweise entlastet, wodurch kostengünstige handelsübliche Rollenlager verwendet werden können.

Zusammenfassend ergibt sich durch die vorliegende Erfindung ein kurzbauendes Getriebe mit einer sehr geringen Zahnradanzahl im Verteilergetriebe und nur einer Torsionswelle. Hierdurch läßt sich der erfindungsgemäße Vorteil einer deutlich vergrößerten Drehmomentübertragung bei kaum vergrößertem konstruktiven Aufwand erzeugen, wobei die selbsttätige gleichmäßige Aufteilung der Antriebsleistung auf die beiden Zwischenräder dafür sorgt, daß die Zwischenräder - auch nicht unbeabsichtigt - keinen vergrößerten Belastungen ausgesetzt sind.

## Patentansprüche

1. Getriebe insbesondere für Doppelschneckenextruder, mit einer Antriebswelle und zumindest einem Abtriebsglied, wobei
das Abtriebsglied zumindest mittelbar mit zwei von der Antriebswelle angetriebenen Zwischenrädern in Wirkverbindung steht und von diesen antreibbar ist,
die Zwischenräder (6, 7) zueinander achsparallel angeordnet sind und auf das gleiche Abtriebsglied (8) einwirken,
die Zwischenräder mit einem gemeinsamen an die Antriebswelle (9) zumindest mittelbar angekoppelten Verteilerrad (5) in Eingriff stehen und von diesem antreibbar sind,
**dadurch gekennzeichnet,**
**daß** das Verteilerrad zumindest mittelbar relativ zu den Zwischenrädern in Radialrichtung beweglich gelagert ist.

2. Getriebe nach Anspruch 1,
**dadurch gekennzeichnet,**
**daß** das Verteilerrad (5) zumindest mittelbar schwenkbar gelagert ist.

3. Getriebe nach zumindest Anspruch 2,
**dadurch gekennzeichnet,**
**daß** zur schwenkbaren Lagerung des Verteilerrades (5) dieses in einem Schwenkglied (14) angeordnet ist, und **daß** das Schwenkglied über ein versetzt zur Verteilerradachse angeordnetes Schwenklager (15) schwenkbar gelagert ist.

4. Getriebe nach zumindest Anspruch 3,
**dadurch gekennzeichnet,**
**daß** die Achse des Schwenklagers (15) so relativ zum Verteilerrad (5) positioniert ist, **daß** die durch die Achse des Schwenklagers und die Achse des Verteilerrades gebildete Ebene parallel zu der Resultierenden (F₁₄) der beiden Zahneingriffsnormalkraftebenen verläuft.

5. Getriebe nach zumindest Anspruch 4,
**dadurch gekennzeichnet,**
**daß** die genannte durch die Achse des Schwenklagers (15) und die Achse des Verteilerrades (5) gebildete Ebene eine Neigung gegenüber der von den Achsen der Zwischenräder (6, 7) gebildeten Ebene aufweist, die dem Betriebseingriffswinkel α_{wt} der Resultierenden der beiden Zahneingriffe entspricht.

6. Getriebe nach zumindest einem der vorstehenden Ansprüche,
**dadurch gekennzeichnet,**
**daß** das Abtriebsglied (8) ein mit einer Abtriebswelle (13) zusammenwirkendes Ritzel ist.

7. Getriebe nach zumindest einem der vorstehenden Ansprüche,
**dadurch gekennzeichnet,**
**daß** das Getriebe zwei Abtriebswellen (10, 13) aufweist, und **daß** nur die erste Abtriebswelle (13) über die zwei Zwischenräder (6, 7) und das Verteilerrad (5), jedoch die zweite Abtriebswelle (10) direkt gegebenenfalls unter Zwischenschaltung eines Reduktionsgetriebes (1, 2) von der Antriebswelle (9) antreibbar ist.

8. Getriebe nach zumindest einem der vorstehenden Ansprüche,
**dadurch gekennzeichnet,**
**daß** das Getriebe ein Doppelschneckenextrudergetriebe für Gegenlaufextrusion ist.

## Claims

1. Gear mechanism, especially for twin-screw extruders, having a drive shaft and at least one output component,
wherein the output component is at least indirectly in operative connection with, and is drivable by, two intermediate wheels driven by the drive shaft,
the intermediate wheels (6, 7) are arranged axially parallel to one another and act on the same output component (8),
the intermediate wheels are in engagement with, and are drivable by, a common distributor wheel (5) that is at least indirectly coupled to the drive shaft (9),
**characterised in that**
the distributor wheel is at least indirectly mounted so as to be movable in the radial direction relative to the intermediate wheels.

2. Gear mechanism according to claim 1,
**characterised in that**
the distributor wheel (5) is at least indirectly pivotally mounted.

3. Gear mechanism according to at least claim 2,
**characterised in that**
for the pivotal mounting of the distributor wheel (5), the latter is arranged in a pivot member. (14); and the pivot member is pivotally mounted by means of a pivot bearing (15) which is arranged offset relative to the distributor wheel axis.

4. Gear mechanism according to at least claim 3,
**characterised in that**
the axis of the pivot bearing (15) is so positioned relative to the distributor wheel (5) **that** the plane formed by the axis of the pivot bearing and the axis of the distributor wheel extends parallel to the resultant (F₁₄) of the two tooth engagement normal force planes.

5. Gear mechanism according to at least claim 4,
**characterised in that**
the said plane formed by the axis of the pivot bearing (15) and the axis of the distributor wheel (5) has an inclination relative to the plane formed by the axes of the intermediate wheels (6, 7) that corresponds to the operating engagement angle α_{wt} of the resultant of the two tooth engagements.

6. Gear mechanism according to at least one of the preceding claims,
**characterised in that**
the output component (8) is a pinion co-operating with an output shaft (13).

7. Gear mechanism according to at least one of the preceding claims,
**characterised in that**
the gear mechanism has two output shafts (10, 13); and only the first output shaft (13) is drivable by means of the two intermediate wheels (6, 7) and the distributor wheel (5), but the second output shaft (10) is drivable directly by the drive shaft (9), optionally with the intermediate connection of a reduction gear (1, 2).

8. Gear mechanism according to at least one of the preceding claims,
**characterised in that**
the gear mechanism is a twin-screw extruder gear mechanism for counterrotating extrusion.

## Revendications

1. Transmission, en particulier pour extrudeuse à deux vis, comprenant un arbre primaire et au moins un élément secondaire, sachant que l'élément secondaire est en liaison active au moins indirectement avec deux pignons intermédiaires actionnés par l'arbre primaire et peut être actionné par ceux-ci, les pignons intermédiaires (6, 7) sont disposés l'un par rapport à l'autre parallèlement à leur axe et agissent sur le même élément secondaire (8), les pignons intermédiaires engrènent avec une roue de répartition du couple (5) commune, couplée au moins indirectement à l'arbre primaire (9) et peuvent être actionnés par celle-ci, **caractérisée en ce que** la roue de répartition du couple est logée de manière mobile dans le sens radial au moins indirectement par rapport aux pignons intermédiaires (6, 7).

2. Transmission selon la revendication 1, **caractérisée en ce que** la roue de répartition (5) est logée au moins indirectement de manière à pouvoir pivoter.

3. Transmission selon au moins la revendication 2, **caractérisée en ce que** pour le montage pivotant de la roue de répartition (5), celle-ci est disposée dans un élément pivotant (14), et **en ce que** l'élément pivotant est logé de manière à pouvoir pivoter par l'intermédiaire d'un palier pivotant (15) décalé par rapport à l'axe de la roue de répartition.

4. Transmission selon au moins la revendication 3, **caractérisée en ce que** l'axe du palier pivotant (15) est positionné par rapport à la roue de répartition (5), de telle sorte que le plan formé par l'axe du palier pivotant et l'axe de la roue de répartition s'étend parallèlement à la résultante de force (F₁₄) des deux plans des forces normales d'engrènement.

5. Transmission selon au moins la revendication 4, **caractérisée en ce que** ledit plan formé par l'axe du palier pivotant (15) et l'axe de la roue de répartition (5) est incliné par rapport au plan formé par les axes des pignons intermédiaires (6, 7), lequel correspond à l'angle de pression de fonctionnement α_{wt} des forces résultantes des deux engrènements.

6. Transmission selon au moins l'une des revendications précédentes, **caractérisée en ce que** l'élément secondaire (8) est un pignon coopérant avec un arbre de sortie (13).

7. Transmission selon au moins l'une des revendications précédentes, **caractérisée en ce que** la transmission comporte deux arbres de sortie (10, 13), et **en ce que** seul le premier arbre de sortie (13) peut être actionné par les deux pignons intermédiaires (6, 7) et la roue de répartition (5), alors que le deuxième arbre de sortie (10) peut être actionné directement par l'arbre primaire (9), le cas échéant par l'intermédiaire d'un engrenage démultiplicateur (1, 2).

8. Transmission selon au moins l'une des revendications précédentes, **caractérisée en ce que** la transmission est une transmission pour extrudeuse à deux vis destinée à une extrusion à contresens.
